# FASCICULE DE BREVET EUROPEEN

(11) **EP 0 326 483 B1**
(45) Date de publication et mention de la délivrance du brevet: **12.01.1994**
(21) Numéro de dépôt: 89400199.9
(22) Date de dépôt: 25.01.1989
(51) Int. Cl.: F16F 9/30, F16F 1/36, B60G 17/04

(54) **Ressort à compression hydrostatique d'élastomère et procédé de réalisation**
Feder mit hydrostatischem Zusammendrücken eines Elastomers und Verfahren zur Herstellung
Spring using hydrostatic compression of an elastomer, and process for manufacturing it

(30) Priorité: 26.01.1988 FR 8800878
(43) Date de publication de la demande: 02.08.1989
(73) Titulaire: SOCIETE D'EXPLOITATION DES RESSORTS AUTO-AMORTISSEURS JARRET Société Anonyme dite:, F-75009 Paris (FR)
(72) Inventeur: Jarret, Jacques, F-78430 Louveciennes (FR)
(74) Mandataire: Levesque, Denys

(56) Documents cités:
- EP-A- 0 101 365
- EP-A- 0 197 759
- FR-A- 2 368 127
- GB-A- 759 423

## Description

L'invention se rapporte à un ressort à compression hydrostatique d'élastomère, constitué par une enveloppe tubulaire cintrée, de section aplatie, possédant une paroi déformable et électriquement isolante, cette enveloppe étant remplie d'une masse d'élastomère dont il est possible de faire varier le volume par dilatation thermique à l'aide d'une résistance électrique qui, reliée à une source d'alimentation en courant, est susceptible d'échauffer ladite masse par effet Joule.

On connaît par le document EP-A-0 101 365 un ressort de ce genre, dans lequel une âme métallique, formée par une lame flexible noyée dans l'élastomère, constitue ladite résistance de chauffage. Un tel élément de chauffage offre une résistance ohmique de valeur très faible, ce qui présente l'inconvénient de nécessiter un courant d'alimentation d'intensité très élevée, et crée dans le ressort un notable gradient de température transversal.

La présente invention a pour but de remédier à cet inconvénient.

A cet effet, selon l'invention, ladite résistance électrique est constituée par la masse d'élastomère elle-même, l'élastomère utilisé étant conducteur de l'électricité et offrant une résistivité compatible avec la puissance de chauffage requise et les caractéristiques de la source d'alimentation électrique.

Une telle disposition conduit à un élément chauffant - l'élastomère lui-même - de résistance ohmique beaucoup plus grande que celle d'une lame métallique; l'intensité du' courent d'alimentation peut donc être réduite à une valeur basse de production plus aisée. De plus, la présence d'une âme flexible interne n'est plus indispensable. En outre, la température au sein du ressort est beaucoup plus uniforme.

L'élastomère conducteur peut être formé d'un élastomère de base non conducteur auquel a été incorporée une charge de substance conductrice. Plus particulièrement, on peut utiliser un élastomère de base du type siloxane avec, pour charge conductrice, du noir de carbone. Par contre, des compositions polymères conductrices connues par le document FR-A-2 368 127, qui sont formées d'un polymère contenant en dispersion une charge conductrice tel que du noir de carbone, ne conviendraient pas, car elles ont un coefficient de température positif et présentent une "température de commutation" T_{c} où la résistivité augmente rapidement quand la température croit.

Il conviendra en général d'ajuster la résistivité de l'élastomère conducteur à une valeur de l'ordre de 1 à 10 ohm.cm.

L'enveloppe tubulaire du ressort est de préférence fermée à ses extrémités par des embouts métalliques par l'intermédiaire desquels la masse d'élastomère conducteur peut être reliée à la source de courant électrique, la face de contact de chaque embout avec l'élastomère offrant une texture superficielle rugueuse de façon à réduire la résistance électrique de jonction entre embout et élastomère.

Le ressort, en raison de sa forme cintrée longitudinalement et de sa section transversale aplatie, comporte des faces d'intrados et d'extrados. Celles-ci sont constituées de préférence par des portions de surfaces parallèles, soit sensiblement cylindriques et coaxiales, soit sensiblement sphériques et concentriques.

L'invention a également pour objet un procédé de fabrication d'un ressort tel que défini ci-dessus, offrant longitudinalement une forme cintrée et transversalement une section aplatie, et constitué essentiellement par une enveloppe tubulaire déformable remplie d'élastomère et fermée à ses extrémités par des embouts métalliques. Selon ce procédé :
- on moule une masse d'élastomère électriquement conducteur vulcanisé en un boudin offrant la forme cintrée désirée pour le ressort, avec une section aplatie, au surplus amincie dans la région des bordures latérales dudit boudin séparant les faces d'intrados et d'extrados de celui-ci,
- on place aux extrémités de ce boudin les embouts métalliques, qui offrent une section identique à celle du boudin,
- autour du boudin muni desdits embouts, on réalise l'enveloppe tubulaire en appliquant des bandes de tissu pré-imprégnées alternativement sur les faces d'intrados et d'extrados du boudin et des embouts, les bords latéraux de ces bandes étant rabattus sur lesdites bordures latérales de façon à les envelopper, puis on procède à la cuisson dans un moule du produit d'imprégnation de l'enveloppe ainsi confectionnée,
- on met en place des manchons de liaison mécanique autour des extrémités de l'enveloppe recouvrant les embouts
- et on ajoute, si besoin est, un complément d'élastomère ou de tout autre produit approprié par injection dans l'enveloppe tubulaire, à travers l'un des embouts.

Le procédé précédent s'applique à la fabrication d'un ressort dépourvu d'âme centrale. Dans le cas contraire, c'est-à-dire lorsque l'enveloppe tubulaire du ressort doit contenir, outre l'élastomère, une âme centrale plate, de forme cintrée, réalisée en un matériau flexible électriquement isolant, s'étendent longitudinalement de l'un à l'autre desdits embouts métalliques auxquels elle est fixée par ses extrémités, et transversalement sur toute la longueur du grand axe de la section aplatie, sensiblement elliptique, de ladite enveloppe, on peut procéder ainsi, conformément à l'enseignement du document EP-A-0 101 365:
- on enfile sur l'âme une gaine tubulaire étanche et déformable,
- on fixe aux extrémités de l'âme les embouts et on raccorde à ceux-ci, de façon étanche, la gaine tubulaire,
- on enfile par-dessus ladite gaine l'enveloppe tubulaire, faite de fibres tressées, ses extrémités venant respectivement coiffer les embouts,
- on met en place des manchons de liaison mécanique qui serrent les extrémités de l'enveloppe tubulaire sur les embouts,
- on gonfle la gaine tubulaire vie un conduit traversant l'un des embouts et on procède à l'imprégnation de la paroi de l'enveloppe tubulaire à l'aide d'un produit d'imprégnation soumis ensuite à cuisson,
- on injecte une masse d'élastomère de remplissage dans la gaine tubulaire vie ledit conduit.

Selon la présente invention, ce procédé est en outre caractérisé par le fait que :
- on utilise, comme élastomère, un élastomère électriquement conducteur,
- on place dans un moule l'ensemble composé de l'âme, des embouts, de l'enveloppe tubulaire, de la gaine tubulaire interposée entre l'âme et l'enveloppe tubulaire et des manchons en vue du gonflage de ladite gaine, le produit d'imprégnation de l'enveloppe tubulaire étant introduit à travers la paroi du moule,
- et on procède éventuellement à la vulcanisation de l'élastomère remplissant la gaine tubulaire,
le gonflage précité de cette dernière résultant soit d'une insufflation d'air comprimé auxiliaire, soit de l'injection de l'élastomère de remplissage lui-même.

D'autres caractéristiques et avantages de l'invention ressortiront de la description qui va suivre, en regard des dessins annexés, d'exemples de réalisation non limitatifs.

La figure 1 représente, en élévation avec coupe longitudinale partielle, un ressort selon l'invention.

La figure 2 représente une section suivant la ligne II-II de l'objet de la figure 1.

La figure 3 représente, à la manière de la figure 1, un ressort selon l'invention dans une autre forme d'exécution.

La figure 4 représente une section suivant la ligne IV-IV de l'objet de la figure 3.

La figure 5 représente la section transversale d'une variante de réalisation du ressort de la figure 3.

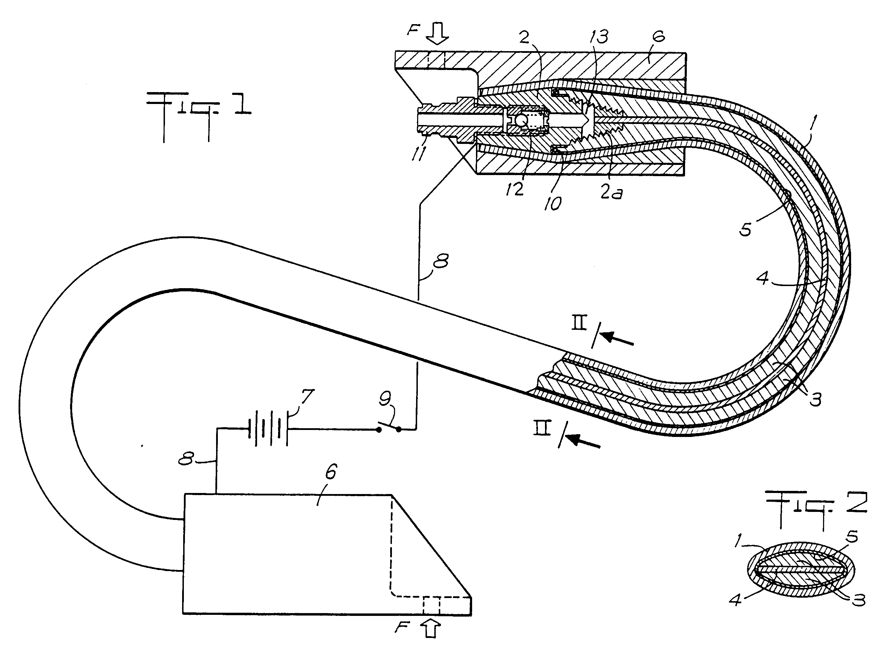

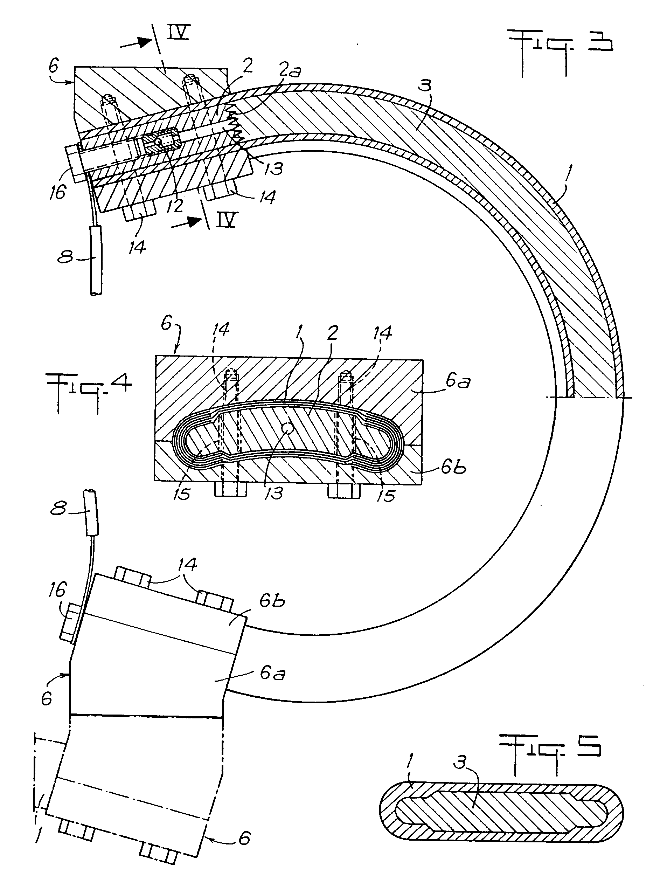

Les figures 1 et 2 montrent une forme d'exécution d'un ressort à compression hydrostatique d'élastomère, qui présente la forme d'un S et comprend une enveloppe tubulaire 1 à paroi déformable, fermée à ses extrémités par des embouts 2 (dont un seul est visible sur la figure 1) et remplie d'une masse d'élastomère 3. Une âme flexible plate 4 court centralement à l'intérieur de l'enveloppe 1, de l'un à l'autre des embouts auxquels elle est fixée par encastrement. L'enveloppe 1 a une section droite de forme aplatie, sensiblement elliptique, dont le grand axe est matérialisé par l'âme 4 (figure 2) L'enveloppe 1 est tapissée intérieurement par une gaine tubulaire 5.

A chaque extrémité du ressort est placé un manchon 6 de liaison mécanique qui enserre l'embout 2 correspondant, par l'intermédiaire de l'extrémité de l'enveloppe 1 coiffant ledit embout. Chaque manchon 6, qui coopère avec l'embout 2 correspondant pour fermer l'enveloppe 1 de manière étanche, constitue un élément de liaison mécanique du ressort à l'une des deux pièces entre lesquelles il doit être monté. C'est par ces manchons que des forces extérieures F peuvent être appliquées au ressort.

La masse d'élastomère 3 est contenue sous pression à l'intérieur de l'enveloppe tubulaire 1, dont elle est isolée par la gaine 5; elle en remplit tout le volume interne de part et d'autre de l'âme 4. L'élastomère 3 est un élastomère conducteur de l'électricité, obtenu par addition d'une charge conductrice à un élastomère de base, lequel est choisi pour son fort coefficient de dilatation thermique. On peut utiliser un siloxane avec charge de noir de carbone, tel que le mélange-maître "RHODORSIL EC 1075 U" fabriqué par la société Rhône-Poulenc, dont la composition est la suivante :

| | |
|---|---|
| polydiméthylméthylvinylsiloxane | 100 parties |
| noir de carbone | 50 à 60 parties. |

Cet élastomère conducteur a une résistivité de 1,75 ohm.cm environ, qui peut être augmentée ou diminuée en jouant sur la proportion de noir de carbone.

En connectant électriquement, par des conducteurs 8 comportant un interrupteur 9 en série, les embouts métalliques 2 à une source de courant électrique 7, on fait passer un courant électrique dans la masse d'élastomère conducteur 3 (l'enveloppe 1, la gaine 5 et l'âme 4 étant réalisées en matériaux électriquement isolants). L'énergie électrique s'y dissipe sous forme de chaleur, de sorte qu'elle s'échauffe et, par suite, se dilate. L'ajustement du courant électrique traversant l'élastomère conducteur permet de régler la réaction élastique du ressort.

A titre d'exemple, si la puissance maximale à dissiper dans la masse d'élastomère conducteur 3 est de 500 watts sous une tension d'alimentation de 220 volts, il faut que ladite masse 3 ait une résistance de 96,8 ohms. Si sa longueur est de 40 cm et sa section de 2 cm², la résistivité de l'élastomère conducteur doit être de 4,84 ohm.cm, valeur qui peut être atteinte en ajoutant de l'élastomère non conducteur au produit "RHODORSIL" utilisé.

Afin d'assurer une faible résistance électrique d'interface entre la masse d'élastomère 3 et chacun des embouts 2, ceux-ci présentant une protubérance conique 2a qui s'avance au sein de l'élastomère et que l'on a usinée superficiellement par rainurage, striage ou sablage de façon à augmenter sa surface de contact avec l'élastomère.

Un mode de réalisation préféré d'un ressort tel que défini ci-dessus va maintenant être explicité.

Sur une lame flexible, cintrée en S, formant l'âme 4 est enfilée une gaine 5 dont la paroi en caoutchouc, assujettie aux embouts métalliques 2 de manière étanche à l'aide de joncs circulaires 10, forme avec ceux-ci une chambre étanche. Sur cet ensemble est enfilée l'enveloppe tubulaire 1, qui recouvre la gaine 5 et les embouts 2. Cette enveloppe est formée d'une pluralité d'éléments tubulaires juxtaposés les uns dans les autres, qui sont faits de fibres tissées destinées à être imprégnées de résine thermodurcissable.

Après avoir monté sur les embouts 2 les manchons de liaison mécanique 6, on place le tout dans un moule et on gonfle la chambre étanche précitée avec de l'air comprimé introduit à travers l'un des embouts 2, via une tubulure 11 vissée dans l'embout, un clapet à bille 12 incorporé à celui-ci et un conduit 13 partant de ce clapet et débouchant dans la surface 2a de jonction de l'embout et de la masse d'élastomère 3, tandis que l'autre embout 2 est obturé par son clapet à bille. On procède alors à l'imprégnation de la paroi de l'enveloppe 1; le produit d'imprégnation, introduit via des orifices percés dans le moule précité, est soumis ensuite à une cuisson.

Puis on cesse l'insufflation d'air comprimé et on injecte, par la même voie, l'élastomère conducteur de remplissage du ressort, que l'on soumet de préférence à un traitement de vulcanisation.

En variante, on peut se passer de l'insufflation d'air comprimé, le gonflage de la chambre étanche précitée étant alors obtenu directement par l'injection de l'élastomère conducteur lui-même.

Dans une autre forme d'exécution d'un ressort à compression hydrostatique d'élastomère conducteur, illustrée par les figures 3 et 4, il n'est pas fait usage d'une âme flexible telle que l'âme 4 de l'exemple précédent. Pour réaliser le ressort, on part d'un boudin d'élastomère conducteur 3 moulé suivant la forme choisie pour le ressort, savoir la forme d'un C (plutôt que d'un S pour des raisons pratiques liées au mode de réalisation de l'enveloppe tubulaire qui va être décrit).

Puis on confectionne autour de ce boudin 3, après vulcanisation, l'enveloppe tubulaire 1 avec des bandes de tissu pré-imprégné. On applique ces bandes alternativement sur la face d'intrados et sur la face d'extrados du boudin 3, les lisières de chaque bande venant envelopper les bordures latérales dudit boudin. Cette disposition, qui conduit à un nombre de couches doublé sur les bordures par rapport à celui qui correspond aux faces d'intrados et d'extrados, procure un renforcement de l'enveloppe 1 dans la région desdites bordures de façon qu'elle résiste aux efforts du cisaillement qui y seront particulièrement élevés lorsque le ressort travaillera. Etant donné qu'il en résulte une surépaisseur locale de l'enveloppe 1, les bordures du boudin 3 sont amincies en conséquence de façon que, lorsque toutes les bandes ont été mises en place, l'ensemble présente une section droite offrant la forme désirée, régulière et sans ressaut, comme le montre la figure 4. En pratique, le nombre de bandes appliquées sur chaque face du boudin 3 est au moins égal à trois. On notera que l'enveloppe 1 ainsi confectionnée recouvre non seulement le boudin 3, mais les embouts 2 placés aux extrémités de celui-ci, lesquels ont une forme cylindrique de même section que le boudin 3. Finalement, on place le tout dans un moule où l'on soumet l'enveloppe 1 à une cuisson destinée à opérer le durcissement du produit d'imprégnation des bandes textiles qui la composent.

On met alors en place les manchons 6, formés de deux parties complémentaires 6a, 6b, pour serrer les extrémités de l'enveloppe 1 sur les embouts 2, et on perce ces derniers de trous pour livrer passage à des vis 14 d'assemblage des parties 6a, 6b des manchons 6. Il convient de placer autour des vis 14 des douilles isolantes 15 pour assurer l'isolement électrique des manchons 6 par rapport aux embouts 2. Ces derniers sont par contre dotés d'indentations sur leur face 2a en contact avec l'élastomère conducteur 3 afin de réaliser une jonction à faible résistance électrique.

Les embouts 2 sont munis, comme dans l'exemple précédent, d'un conduit interne 13 obturable par un clapet à bille 12. Cette disposition permet de réintroduire, en cas de besoin, soit de l'élastomère vulcanisé, conducteur ou non, soit du noir de carbone, afin d'ajuster le taux de compression de l'élastomère dans l'enveloppe 1 et la valeur de sa résistivité électrique. A chaque embout 2 est raccordé, à l'aide d'une vis de serrage 16, un fil conducteur 8 de liaison à une source de courant électrique qui, lorsqu'elle est mise en service, fait passer un courant électrique dans l'élastomère 3 et assure un échauffement de celui-ci par effet Joule.

On a indiqué en traits mixtes, sur la figure 3, l'extrémité d'un second ressort également cintré en C, identique au premier, auquel il est relié par accouplement des manchons 6 contigus des deux ressorts. Une telle disposition est utilisable lorsqu'on désire obtenir un ressort en S, comme celui de la figure 1, à partir de ressorts réalisés suivant la deuxième forme d'exécution.

Comme le montre la figure 4, le ressort de la figure 3 a une section droite incurvée en forme de haricot. Par suite, les faces d'intrados et d'extrados du ressort sont des portions de surfaces sensiblement sphériques et concentriques. En variante (figure 5), la section droite peut ne pas être incurvée, les faces d'intrados et d'extrados étant alors des portions de surfaces sensiblement cylindriques et coaxiales.

## Revendications

1. Ressort à compression hydrostatique d'élastomère, constitué par une enveloppe tubulaire cintrée, de section aplatie, possédant une paroi déformable et électriquement isolante, cette enveloppe étant remplie d'une masse d'élastomère dont il est possible de faire varier le volume par dilatation thermique à l'aide d'une résistance électrique qui, reliée à une source d'alimentation en courant, est susceptible d'échauffer ladite masse par effet Joule,
caractérisé par le fait que ladite résistance électrique est constituée par la masse d'élastomère (3) elle-même, l'élastomère utilisé étant conducteur de l'électricité et offrant une résistivité compatible avec la puissance de chauffage requise et les caractéristiques de la source d'alimentation électrique (7).

2. Ressort selon la revendication 1, caractérisé par le fait que l'élastomère conducteur est formé d'un élastomère de base non conducteur auquel a été incorporée une charge de substance conductrice.

3. Ressort selon la revendication 2, caractérisé par le fait que l'élastomère de base est du type siloxane et que la charge conductrice est du noir de carbone.

4. Ressort selon l'une quelconque des revendications 1 à 3, caractérisé par le fait que la résistivité de l'élastomère conducteur est de l'ordre de 1 à 10 ohm.cm.

5. Ressort selon l'une quelconque des revendications 1 à 4, caractérisé par le fait que l'enveloppe tubulaire (1) est fermée à ses extrémités par des embouts métalliques (2) par l'intermédiaire desquels la masse (3) d'élastomère conducteur peut être reliée à la source de courant électrique (7), la face de contact de chaque embout (2) avec l'élastomère (3) offrant une texture superficielle rugueuse.

6. Ressort selon l'une quelconque des revendications 1 à 5, caractérisé par le fait que ses faces d'intrados et d'extrados sont des portions de surfaces sensiblement cylindriques et coaxiales.

7. Ressort selon l'une quelconque des revendications 1 à 5, caractérisé par le fait que ses faces d'intrados et d'extrados sont des portions de surfaces sensiblement sphériques et concentriques.

8. Ressort selon l'une quelconque des revendications 1 à 5, caractérisé par le fait que l'enveloppe tubulaire (1) contient une âme centrale plate (4), réalisée en un matériau flexible électriquement isolant, qui s'étend longitudinalement de l'un à l'autre desdits embouts (2) , auxquels elle est fixée par ses extrémités, et transversalement sur toute la longueur du grand axe de la section aplatie, sensiblement elliptique, de ladite enveloppe (1).

9. Procédé de réalisation d'un ressort à compression hydrostatique d'élastomère selon la revendication 8, constitue essentiellement par une enveloppe tubulaire (1) déformable contenant une âme plate (4) cintrée longitudinalement, cette enveloppe étant remplie d'élastomère et fermée à ses extrémités par des embouts métalliques, selon lequel :
- on enfile sur l'âme (4) une gaine tubulaire (5) étanche et déformable,
- on fixe aux extrémités de l'âme (4) les embouts (2) et on raccorde à ceux-ci, de façon étanche, la gaine tubulaire (5),
- on enfile par-dessus ladite gaine l'enveloppe tubulaire (1), faite de fibres tressées, ses extrémités venant respectivement coiffer les embouts ( 2),
- on met en place des manchons (6) de liaison mécanique qui serrent les extrémités de l'enveloppe tubulaire (1) sur les embouts (2),
- on gonfle la gaine tubuleire (5) vie un conduit (13) traversant l'un des embouts (2) et on procède à l'imprégnation de la paroi de l'enveloppe tubulaire (1) à l'aide d'un produit d'imprégnation soumis ensuite à cuisson, et
- on injecte une masse (3) d'élastomère de remplissage dans la gaine tubulaire (5) vie ledit conduit (13),
caractérisé par le fait que :
- on utilise, comme élastomère, un élestomère électriquement conducteur,
- on place dans un moule l'ensemble composé de l'âme (4), des embouts (2), de l'enveloppe tubulaire (1), de la gaine tubulaire (5) interposée entre l'âme (4) et l'enveloppe tubulaire (1) et des manchons (6) en vue du gonflage de ladite gaine, le produit d'imprégnation de l'enveloppe tubulaire (1) étant introduit à travers la paroi du moule,
- et on procède éventuellement à la vulcanisation de l'élastomère remplissant la gaine tubulaire,
le gonflage précité de cette derniere résultant soit d'une insufflation d'air comprimé auxiliaire, soit de l'injection de l'élastomère de remplissage lui-même.

10. Procédé de réalisation d'un ressort à compression hydrostatique d'élastomère selon l'une quelconque des revendications 1 à 7, un tel ressort, offrent longitudinalement une forme cintrée et transversalement une section aplatie, étant constitué essentiellement par une enveloppe tubulaire déformable remplie d'élastomère et fermée à ses extrémités par des embouts métalliques,
caractérisé par le fait que :
- on moule une masse d'élastomère électriquement conducteur vulcanisé en un boudin (3) offrant la forme cintrée désirée pour le ressort, avec une section aplatie, au surplus amincie dans la région des bordures latérales dudit boudin séparant les faces d'intrados et d'extrados de celui-ci,
- on place aux extrémités de ce boudin (3) les embouts métalliques (2), qui offrent une section identique à celle du boudin,
- autour du boudin (3) muni desdits embouts (2), on réalise l'enveloppe tubulaire (1) en appliquant des bandes de tissu pré-imprégnées alternativement sur les faces d'intrados et d'extrados du boudin et des embouts, les bords latéraux de ces bandes étant rabattus sur lesdites bordures latérales de facon à les envelopper, puis on procède à la cuisson dans un moule du produit d'imprégnation de l'enveloppe (1) ainsi confectionnée,
- on met en place des manchons (6) de liaison mécanique autour des extrémités de l'enveloppe (1) recouvrant les embouts (2)
- et on ajoute, si besoin est, un complément d'élastomère ou de tout autre produit approprié par injection dans l'enveloppe tubulaire (1), à travers l'un des embouts (2).

## Claims

1. Hydrostatically compressed elastomeric spring, constituted by a bent tubular envelope, of flattened cross-section, having a deformable and electrically insulating wall, said envelope being filled with a mass of elastomer, the volume of which can be caused to vary by thermal expansion induced by an electrical resistor which, being connected to an electrical supply source, can heat said mass by Joule effect, characterized by the fact said electrical resistor is constituted by the elastomer mass (3) itself, the elastomer used being electrically conductive and exhibiting a resistivity which is compatible with the required heating power and with the characteristics of the electrical supply source.

2. Spring according to claim 1, characterized by the fact that the conductive elastomer is made up of a non-conductive basic elastomer into which a load of conductive substance has been incorporated.

3. Spring according to claim 2, characterized by the fact that the basic elastomer is of siloxane type and the conductive load is carbon black.

4. Spring according to any one of claims 1 to 3, characterized by the fact that the resistivity of the conductive elastomer ranges between 1 and 10 ohm.cm.

5. Spring according to any one of claims 1 to 4, characterized by the fact that the tubular envelope (1) is closed at its ends by metal endpieces (2) via which the mass (3) of conductive elastomer can be connected to the electrical supply source (7), the face of each endpiece (2) in contact with the elastomer (3) having a rough surface texture.

6. Spring according to any one of claims 1 to 5, characterized by the fact that its intrados and extrados faces are portions of substantially cylindrical and co-axial surfaces.

7. Spring according to any one of claims 1 to 5, characterized by the fact that its intrados and extrados faces are substantially spherical and concentric portions of surfaces.

8. Spring according to any one of claims 1 to 5, characterized by the fact that the tubular envelope (1) contains a flat central core (4), produced in an electrically insulating flexible material, extending longitudinally from one endpiece (2) to the other, while being fixed thereto by its ends, and transversely through the whole length of the big axis of the flattened, substantially elliptical section of said envelope (1).

9. Method for producing a hydrostatically compressed elastimeric spring according to claim 8, constituted essentially by a deformable tubular envelope (1) containing a longitudinally bent flat core (4), said envelope being filled with elastomer and closed at its ends by metal endpieces, said method consisting in:
- fitting a tight and deformable tubular casing (5) over the core (4),
- fixing the endpieces (2) to the ends of the core (4), and connecting said endpieces in fluid-tight manner to the tubular casing (5),
- fitting the tubular envelope (1) made of braided fibers over said casing, the ends of said envelope respectively covering over the endpieces (2),
- positioning the mechanical connection sleeves (6) which clamp the ends of the tubular envelope (1) on the endpieces (2),
- inflating the tubular casing (5) via a conduit (13) formed through one of the endpieces (2) and impregnating the wall of the tubular envelope (1) with an impregnation product which is thereafter subjected to a baking treatment, and
- injecting a filling mass (3) of electrically conductive elastomer into the tubular casing (5) via said conduit (13),
characterized by the steps of:
- using, as elastomer, an electrically conductive elastomer,
- placing in a mold the assembly composed of the core (4), the endpieces (2), the tubular envelope (1), the tubular casing (5) interposed between the core (4) and the tubular envelope (1) and the sleeves (6), for inflating said casing, the tubular casing impregnating product (1) being introduced through the wall of the mold, and
- and optionally vulcanizing the elastomer filling the tubular casing,
said casing-inflating operation being performed either by blowing in an auxiliary compressed air, or by injecting the actual filling elastomer.

10. Method for producing a hydrostatlcally compressed elastomeric spring according to any one of claims 1 to 7, said spring which has longitudinally a bent shape and transversely a flattened cross-section, being essentially constituted by a deformable tubular envelope filled with elastomer and closed at its ends by metal endpieces,
characterized by the steps of:
- molding a mass of electrically conductive vulcanized elastomer into a sausage (3) which has the bent shape required for the spring, with a flattened cross-section, and which is moreover thinner in the vicinity of the lateral edges of said sausage separating the intrados and extrados faces thereof,
- placing on the ends of said sausage (3) the metal endpieces (2) of cross-section identical to that of the sausage,
- forming the tubular envelope (1) around the sausage (3) equipped with the endpieces (2), by applying pre-impregnated bands of fabric alternately on the intrados and extrados faces of the sausage and of the endpieces, the lateral borders of said bands being folded over on said lateral edges in such a way as to cover them closely, and then in baking in a mold the impregnation product of the resulting envelope (1),
- placing mechanical connection sleeves (6) around the ends of the envelope (1) covering the endpieces (2),
- and if necessary, adding a complement of elastomer or of any other appropriate product by injection into the envelope (1) through one of the endpieces (2).

## Patentansprüche

1. Feder mit hydrostatischer Kompression eines Elastomers, bestehend aus einer rohrförmigen gewölbten Hülle mit flachem Querschnitt und einer verformbaren und elektrisch isolierenden Wand, wobei die Umhüllung mit einer elastomeren Masse gefüllt ist, deren Volumen durch thermische Expansion mittels eines elektrischen Widerstandes geändert werden kann, der, angeschlossen an eine Speisestromquelle, die Masse aufgrund des Joule'schen Effekts erwärmen kann,
**dadurch gekennzeichnet**, daß
der elektrische Widerstand selbst aus der Elastomermasse (3) besteht, wobei das verwendete Elastomer elektrisch leitend ist und einen spezifischen Widerstand hat, der mit der erforderlichen Heizleistung und den Charakteristika der elektrischen Speisequelle (7) kompatibel ist.

2. Feder nach Anspruch 1,
**dadurch gekennzeichnet**, daß
das leitende Elastomer aus einem nicht leitenden Grundelastomer, dem ein leitender Füllstoff beigemengt ist, gebildet ist.

3. Feder nach Anspruch 2,
**dadurch gekennzeichnet**, daß
das Grundelastomer vom Typ Siloxan ist, und daß der leitende Füllstoff Ruß ist.

4. Feder nach einem der Ansprüche 1 bis 3,
**dadurch gekennzeichnet**, daß
der spezifische Widerstand des leitenden Elastomers in der Größenordnung von 1 bis 10 Ohm·cm liegt.

5. Feder nach einem der Ansprüche 1 bis 4,
**dadurch gekennzeichnet**, daß
daß die rohrförmige Umhüllung (1) an ihren Enden durch metallische Einsätze (2) verschlossen sind, mittels derer die Masse (3) des leitenden Elastomers an die elektrische Stromquelle (7) angeschlossen werden kann, wobei die Kontaktfläche jedes Einsatzes (2) mit dem Elastomer (3) eine rauhe Oberflächenstruktur hat.

6. Feder nach einem der Ansprüche 1 bis 5,
**dadurch gekennzeichnet**, daß
daß ihre Innen- und Außenseiten Teile im wesentlichen zylindrischer und koaxialer Flächen sind.

7. Feder nach einem der Ansprüche 1 bis 5,
**dadurch gekennzeichnet**, daß
daß ihre Innen- und Außenseiten Teile im wesentlichen kugelförmiger und konzentrischer Flächen sind.

8. Feder nach einem der Ansprüche 1 bis 5,
**dadurch gekennzeichnet**, daß
die rohrförmige Umhüllung (1) eine zentrale, flache Seele (4) hat, die aus einem flexiblen, elektrisch isolierenden Material hergestellt ist und die sich in Längsrichtung von einem zum anderen der Ansätze (2), an denen sie mittels ihrer Enden befestigt ist, und in Querrichtung über die gesamte Länge der großen Achse des flachen, im wesentlichen eliptischen Querschnitts der Umhüllung (1) erstreckt.

9. Verfahren zur Herstellung einer Feder mit hydrostatischer Kompression eines Elastomers nach Anspruch (8), die im wesentlichen aus einer verformbaren Umhüllung (1) besteht, die eine flache, in Längsrichtung gewölbte Seele (4) enthält, wobei die Umhüllung mit einem Elastomer gefüllt und an ihren Enden durch metallische Einsätze verschlossen ist, gemäß dem:
- auf die Seele (4) ein dichter und verformbarer rohrförmiger Schlauch (5) geschoben wird,
- an den Enden der Seele (4) die Einsätze (2) befestigt werden, und an diese der rohrförmige Schlauch (5) dicht angeschlossen wird,
- auf den Schlauch die rohrförmige Umhüllung (1), die aus gewebten Fasern hergestellt ist, geschoben wird, wobei ihre Enden jeweils die Einsätze (2) überdecken,
- Hülsen (6) zur mechanischen Verbindung angebracht werden, die die Enden der rohrförmigen Umhüllung (1) auf die Einsätze (2) drücken,
- der rohrförmige Schlauch (5) über eine Leitung (13), die einen der Einsätze (2) durchsetzt, aufgeblasen und die Wand der rohrförmigen Umhüllung mittels eines Imprägnierungsmittels imprägniert wird, das dann gehärtet wird, und
- eine Elastomerfüllmasse (3) in den rohrförigen Schlauch (5) über die Leitung (13) eingespritzt wird,
**dadurch gekennzeichnet**, daß:
- als Elastomer ein elektrisch leitendes Elastomer verwendet wird,
- die Anordnung, die aus der Seele (4), den Einsätzen (2) der rohrförmigen Umhüllung (1), dem rohrförmigen Schlauch (5), der zwischen der Seele (4) und der rohrförmigen Umhüllung (1) angeordnet ist, und die Hülsen (6) für das Aufblasen des Schlauches in einer Form angeordnet werden, wobei das Imprägnierungsmittel der rohrförmigen Umhüllung (1) über die Wand der Form eingeführt wird,
- und gegebenenfalls das den rohrförmigen Schlauch füllende Elastomer vulkanisiert wird,
wobei sich das vorgenannte Aufblasen des letzteren, sei es durch Einblasen komprimierter Zusatzluft oder durch das Einleiten des Füllelastomers selbst ergibt.

10. Verfahren zur Herstellung einer Feder mit hydrostatischer Kompression eines Elastomers nach einem der Ansprüche 1 bis 7, wobei eine solche Feder, die in Längsrichtung eine gewölbte Form und in Querrichtung einen flachen Querschnitt hat, im wesentlichen aus einer rohrförmigen, verformbaren, mit dem Elastomer gefüllten und an ihren Enden durch metallische Einsätze verschlossenen Umhüllung besteht,
**dadurch gekennzeichnet**, daß:
- eine elektrisch leitende, vulkanisierte Elastomermasse zu einem Strang (3) geformt wird, der die für die Feder gewünschte, gewölbte Form mit flachem Querschnitt hat, die außerdem im Bereich der Seitenkanten des Strangs, die die Innen- und Außenseiten trennen, verdünnt ist,
- an den Enden dieses Stranges (3) die metallischen Einsätze (2) angeordnet werden, die den gleichen Querschnitt wie der Strang haben,
um den mit den Einsätzen (2) versehenen Strang (3) die rohrförmige Umhüllung (1) gebildet wird, indem vorimprägnierte Gewebebänder abwechselnd auf die Innen- und Außenseiten des Stranges und die Einsätze aufgebracht werden, wobei die Seitenränder dieser Bänder über die Seitenkanten so umgelegt werden, daß sie sie umhüllen, worauf das Imprägnierungsmittel der so gebildeten Umhüllung (1) gehärtet wird,
Hülsen (6) zur mechanischen Verbindung auf den Enden der die Einsätze (2) bedeckenden Umhüllung (1) angeordnet werden,
und, wenn notwendig, ein Zusatz eines Elastomers oder eines anderen zur Injektion in den rohrförmigen Schlauch (1) geeigneten Materials über einen der Einsätze (2) zugefügt wird.
